# EUROPEAN PATENT SPECIFICATION

(11) **EP 2 802 114 B1**
(45) Date of publication and mention of the grant of the patent: **22.04.2020**
(21) Application number: 12864283.2
(22) Date of filing: 24.12.2012
(51) Int. Cl.: H04L 29/06, H04L 29/08, G06Q 30/02

(54) **METHOD AND CLIENT FOR DISPLAYING ADVERTISEMENTS**
VERFAHREN UND CLIENT ZUR ANZEIGE VON WERBUNG
PROCÉDÉ ET CLIENT DESTINÉS À AFFICHER DES ANNONCES PUBLICITAIRES

(30) Priority: 06.01.2012 CN 201210002869
(43) Date of publication of application: 12.11.2014
(73) Proprietor: TENCENT TECHNOLOGY (SHENZHEN) COMPANY LIMITED, Guangdong 518044 (CN)
(72) Inventor: HE, Zhiqiang, Shenzhen-City Guangdong 518044 (CN); LI, Qi, Shenzhen-City Guangdong 518044 (CN); ZHOU, Jing, Shenzhen-City Guangdong 518044 (CN); MA, Liang, Shenzhen-City Guangdong 518044 (CN)
(74) Representative: Gunzelmann, Rainer
(86) International application number: PCT/CN2012/087318
(87) International publication number: WO 2013/102408

(56) References cited:
- EP-A1- 2 065 848
- CN-A- 101 046 873
- CN-A- 101 075 892
- CN-A- 101 996 371
- US-B1- 6 442 529
- "MobAd Technical Specification - Core Specification ; OMA-TS-MobAd_Core-V1_0-20100408-C", OMA-TS-MOBAD_CORE-V1_0-20100408-C, OPEN MOBILE ALLIANCE (OMA), 4330 LA JOLLA VILLAGE DR., SUITE 110 SAN DIEGO, CA 92122 ; USA , no. 1.0 8 April 2010 (2010-04-08), pages 1-54, XP064137875, Retrieved from the Internet: URL:ftp/Public_documents/CD/MobAd/Permanen t_documents/ [retrieved on 2012-03-16]

## Description

### TECHNICAL FIELD

The present disclosure relates to Internet communication technologies, particularly relates to a method and client for displaying advertisements.

### BACKGROUND

Promotion activities are often needed in product operations to enhance market popularity of products and increase user stickiness. The most common way of promotion activity is to display product advertisements.

Existing technologies provide a method for displaying advertisements: specifically, first of all, an operator embeds advertisement information to be displayed in an application program and couples advertisement realization logic to the logic framework of the application program; a user downloads the application program to a client, the client runs the application program, at the same time, runs the advertisement realization logic coupled in the application program, and displays the advertisement information embedded in the application program to the user, in order to achieve advertisement display.

In the process of realizing the present disclosure, the inventor finds that existing technologies have at least the following problems: in an operating cycle of the application program, the advertisement information embedded in the application program may not be updated, and thus existing methods for displaying advertisements may not enable dynamic update of advertisements.

EP2065848A1 relates to an apparatus and a method of displaying advertisements in the contents of games.

EP2461285A1 relates to a method, an apparatus, and a system for placing an advertisement.

### SUMMARY

In order to be able to dynamically update advertisements displayed by a client, the present disclosure provides a method for displaying advertisement and a client. The invention is defined by the independent claims. A method for displaying advertisements, implemented on a client, includes:
downloading an advertisement configuration file from a server, and if the advertisement configuration file is a new version of advertisement configuration file, extracting a name of an advertisement picture resource package from the advertisement configuration file, and downloading the corresponding advertisement picture resource package according to the name from the server;
parsing out an advertisement display location and advertisement configuration information from the advertisement configuration file, the advertisement configuration information including an advertisement validity period; and
adding advertisement configuration information within the advertisement validity period into an advertisement alternate playing list, displaying an advertisement at the advertisement display location on a screen of the client according to the advertisement alternate playing list and the advertisement picture resource package; in which
the method further includes:
   in response to receiving a user's click operation on the advertisement, reading link configuration information from advertisement configuration information pointed at by a pointer related to the advertisement in the advertisement alternate playing list; and
   in response to determining that the link configuration information comprises message content, creating a message box and loading the message content to the message box.

Downloading the advertisement configuration file includes:
sending a configuration downloading request to the server, the configuration downloading request containing information that represents resolution of the screen of the client, and the server obtaining the advertisement configuration file according to the information that represents the resolution of the screen of the client; and
receiving a configuration downloading response message, the configuration downloading response message carrying the advertisement configuration file obtained by the server.

Downloading the corresponding advertisement picture resource package corresponding to the name includes:
sending a picture downloading request message to the server, the picture downloading request message containing the name, and the server obtaining the corresponding advertisement picture resource package according to the name; and
receiving a picture downloading response message, the picture downloading response message carrying the advertisement picture resource package obtained by the server.

Displaying the advertisement at the advertisement display location on the screen of the client according to the advertisement alternate playing list and the advertisement picture resource package includes:
setting a pointer to point at a first line of advertisement configuration information in the advertisement alternate playing list;
reading an advertisement title and an advertisement content address from the advertisement configuration information pointed at by the pointer, obtaining corresponding advertisement content from the advertisement picture resource package according to the advertisement content address, and displaying the advertisement content and the advertisement title at the advertisement display location on the screen of the client; and
determining whether the advertisement configuration information pointed at by the pointer is a last line of advertisement configuration information, if the determination is yes, setting the pointer to re-point at the first line of advertisement configuration information in the advertisement alternate playing list, and if the determination is no, setting the pointer to skip to a next line of advertisement configuration information in the advertisement alternate playing list.

If the advertisement configuration information further includes advertisement display time, displaying the advertisement at the advertisement display location on the screen of the client according to the advertisement alternate playing list and the advertisement picture resource package further includes:
counting display time when the advertisement content and the advertisement title are displayed on the screen of the client; and
when counted display time reaches the advertisement display time, determining whether the advertisement configuration information pointed at by the pointer is the last line of advertisement configuration information, if the determination is yes, setting the pointer to re-point at the first line of advertisement configuration information in the advertisement alternate playing list, and if the determination is no, setting the pointer to skip to the next line of advertisement configuration information in the advertisement alternate playing list.

If the link configuration information includes a webpage skip address, a corresponding webpage is obtained according to the webpage skip address.

After display of the advertisement corresponding to the advertisement configuration information in the advertisement alternate playing list is completed, advertisement configuration information with a playing-once advertisement playing mode is obtained, an advertisement ID and an advertisement content address are read from the obtained advertisement configuration information, the advertisement configuration information that contains the advertisement ID is deleted from the advertisement configuration file, advertisement content that corresponds to the advertisement content address is deleted from the advertisement picture resource package, and the obtained advertisement configuration information is deleted from the advertisement alternate playing list.

After adding advertisement configuration information within advertisement validity period into the advertisement alternate playing list, the method further includes:
monitoring the advertisement alternate playing list in real time, if a monitoring result shows that the advertisement alternate playing list contains advertisement configuration information beyond the advertisement validity period, then reading an advertisement ID and an advertisement content address from the advertisement configuration information, deleting advertisement configuration information that contains the advertisement ID from the advertisement configuration file, deleting advertisement content that corresponds to the advertisement content address from the advertisement picture resource package, and deleting the advertisement configuration information from the advertisement alternate playing list.

The method further includes:
if the advertisement configuration file is the new version of advertisement configuration file, deleting the advertisement configuration file and the advertisement picture resource package stored at the client.

A client includes:
a downloading module, to download an advertisement configuration file, and if the advertisement configuration file is a new version of advertisement configuration file, extract a name of an advertisement picture resource package from the advertisement configuration file, and download the corresponding advertisement picture resource package according to the name;
a parsing module, to parse out an advertisement display location and advertisement configuration information from the advertisement configuration file, the advertisement configuration information including an advertisement validity period; and
a displaying module, to add advertisement configuration information within the advertisement validity period into an advertisement alternate playing list, display an advertisement at the advertisement display location on a screen of a client according to the advertisement alternate playing list and the advertisement picture resource package; in which
the client further includes:
   an obtaining module to, in response to receiving a user's click operation on the advertisement, read link configuration information from advertisement configuration information pointed at by a pointer related to the advertisement in the advertisement alternate playing list; and in response to determining that the link configuration information comprises message content, create a message box and loading the message content to the message box.

The downloading module includes:
a first sending unit, to send a configuration downloading request to a server, the configuration downloading request containing information that represents resolution of the screen of the client, and the server obtaining the advertisement configuration file according to the information that represents the resolution of the screen of the client; and
a first receiving unit, to receive a configuration downloading response message, the configuration downloading response message containing the advertisement configuration file obtained by the server.

The downloading module includes:
an extraction unit, to extract a name of an advertisement picture resource package from the advertisement configuration file, if the advertisement configuration file is a new version of advertisement configuration file;
a second sending unit, to send a picture downloading request message to a server, the picture downloading request message containing the name of the advertisement picture resource package, and the server obtaining the advertisement picture resource package corresponding to the name; and
a second receiving unit, to receive a picture downloading response message, the picture downloading response message containing the advertisement picture resource package obtained by the server.

The displaying module includes:
an adding unit, to add advertisement configuration information within the advertisement validity period into an advertisement alternate playing list;
a first setting unit, to set a pointer to point at a first line of advertisement configuration information in the advertisement alternate playing list;
a first displaying unit, to read an advertisement title and an advertisement content address from the advertisement configuration information pointed at by the pointer, obtain corresponding advertisement content from the advertisement picture resource package according to the advertisement content address, and display the advertisement content and the advertisement title at the advertisement display location at the client; and
a second setting unit, to determine whether the advertisement configuration information pointed at by the pointer is a last line of advertisement configuration information, if the determination is yes, set the pointer to re-point at the first line of advertisement configuration information in the advertisement alternate playing list, and if the determination is no, set the pointer to skip to a next line of advertisement configuration information in the advertisement alternate playing list.

If the advertisement configuration information also includes display time, the displaying module further includes:
a third setting unit, to count display time when the advertisement content and the advertisement title are displayed on the screen of a client; when counted display time reaches the advertisement display time, determine whether the advertisement configuration information pointed at by the pointer is the last line of advertisement configuration information, if the determination is yes, set the pointer to re-point at the first line of advertisement configuration information in the advertisement alternate playing list, and if the determination is no, set the pointer to skip to the next line of advertisement configuration information in the advertisement alternate playing list.

The client further includes:
an obtaining module to, if the link configuration information includes a webpage skip address, obtain a corresponding webpage according to the webpage skip address.

The client further includes:
a first deletion module, to obtain advertisement configuration information with a playing-once advertisement playing mode from the advertisement alternate playing list, after display of advertisements corresponding to the advertisement configuration information in the advertisement alternate playing list is completed, read an advertisement ID and an advertisement content address from the obtained advertisement configuration information, delete advertisement configuration information that contains the advertisement ID from the advertisement configuration file, delete advertisement content that corresponds to the advertisement content address from the advertisement picture resource package, and delete the obtained advertisement configuration information from the advertisement alternate playing list.

The client further includes:
a monitoring module, to monitor the advertisement alternate playing list in real time, if a monitoring result shows that the advertisement alternate playing list contains advertisement configuration information beyond the advertisement validity period, then read an advertisement ID and an advertisement content address from the advertisement configuration information, delete advertisement configuration information that contains the advertisement ID from the advertisement configuration file, delete advertisement content that corresponds to the advertisement content address from the advertisement picture resource package, and delete the advertisement configuration information from the advertisement alternate playing list.

The client further includes:
a second deletion module, to delete the advertisement configuration file and the advertisement picture resource package stored at the client, if the advertisement configuration file is a new version of advertisement configuration file.

In the embodiment of the present disclosure, when an advertisement configuration file is downloaded, if the advertisement configuration file is a new version of advertisement configuration file, a name of an advertisement picture resource package is extracted from the advertisement configuration file, advertisement picture resource package corresponding to the name of advertisement picture resource package is downloaded; advertisement display location and advertisement configuration information are parsed out from the advertisement configuration file. Advertisement configuration information includes advertisement ID, advertisement playing mode, advertisement title, advertisement validity period, advertisement content address and link configuration information; advertisement configuration information within advertisement validity period is added into an advertisement alternate playing list, and advertisements are displayed at the advertisement display location on a screen of a client according to the advertisement alternate playing list and advertisement picture resource package, so as to dynamically update advertisements displayed at a client.

### BRIEF DESCRIPTION OF THE DRAWINGS

FIG. 1 shows a flow chart of a method for displaying advertisements according to Embodiment 1 of the present disclosure;
FIG. 2 shows a flow chart of a method for displaying advertisements according to Embodiment 2 of the present disclosure;
FIG. 3 shows a schematic diagram of a first kind of structure of a client according to Embodiment 3 of the present disclosure;
FIG. 4 shows a schematic diagram of a second kind of structure of the client according to Embodiment 3 of the present disclosure;
FIG. 5 shows a schematic diagram of a third kind of structure of the client according to Embodiment 3 of the present disclosure; and
FIG. 6 shows a schematic diagram of a fourth kind of structure of the client according to Embodiment 3 of the present disclosure.

### DETAILED DESCRIPTION

In order to better clarify the purpose, technical solutions and advantages of the present disclosure, modes of implementing the present disclosure is further described in detail below in combination with attached figures.

### Embodiment 1

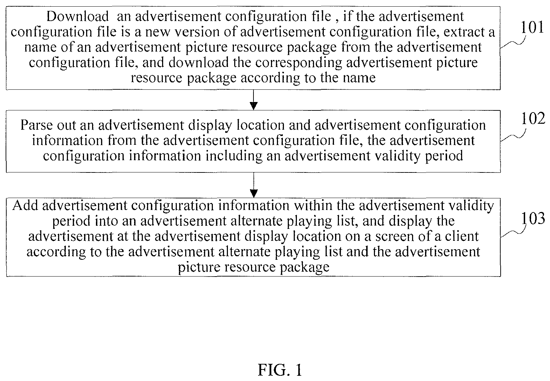

As shown in Fig.1, the embodiment of the present disclosure provides a method of displaying advertisements, including the following process.

At block 101, an advertisement configuration file is downloaded, if the advertisement configuration file is a new version of advertisement configuration file, a name of an advertisement picture resource package is extracted from the advertisement configuration file, and the corresponding advertisement picture resource package is downloaded according to the name.

At block 102, an advertisement display location and advertisement configuration information are parsed out from the advertisement configuration file, the advertisement configuration information including an advertisement validity period.

Optionally, the advertisement configuration information may also include at least one of the information: advertisement ID, advertisement playing mode, advertisement title, advertisement content address, and link configuration information.

At block 103, advertisement configuration information within the advertisement validity period is added into an advertisement alternate playing list, and an advertisement is displayed at an advertisement display location on a screen of a client according to the advertisement alternate playing list and the advertisement picture resource package.

In the embodiment of the present disclosure, when an advertisement configuration file is downloaded, if the advertisement configuration file is a new version of advertisement configuration file, a name of an advertisement picture resource package is extracted from the advertisement configuration file, and the corresponding advertisement picture resource package is downloaded according to the name; an advertisement display location and advertisement configuration information are parsed out from the advertisement configuration file. The advertisement configuration information includes advertisement ID, advertisement playing mode, advertisement title, advertisement validity period, advertisement content address and link configuration information; advertisement configuration information within the advertisement validity period is added into an advertisement alternate playing list,, and an advertisement is displayed at the advertisement display location on a screen of a client according to the advertisement alternate playing list, and the advertisement picture resource package, so as to dynamically update advertisements at the client.

### Embodiment 2

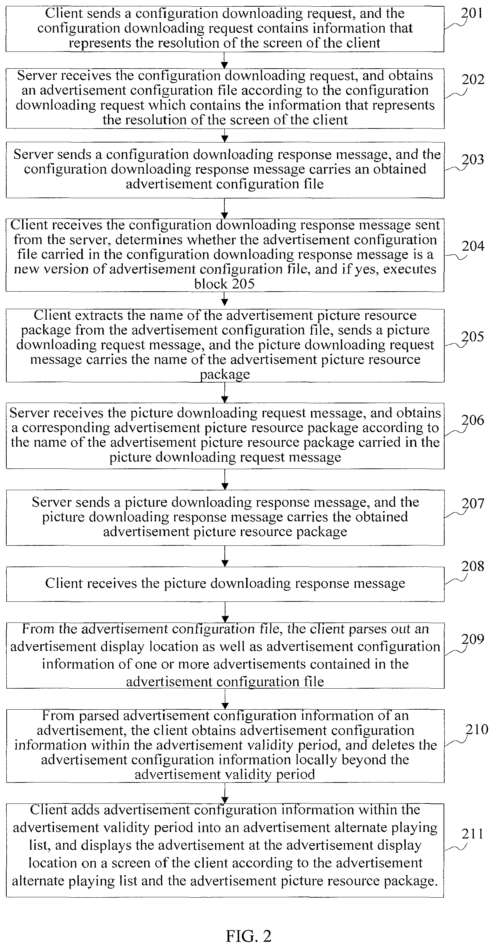

As shown in Fig.2, the embodiment of the present disclosure provides a method for displaying advertisements, including the following process.

At block 201, a client sends a configuration downloading request, and the configuration downloading request contains information that represents resolution of a screen of the client.

The client obtains the information that represents the resolution of the screen of the client, and then sends the configuration downloading request which contains the information that represents the resolution of the screen of the client to a server.

When the client starts an application program, the client may send the configuration downloading request to the server.

For example, the client obtains the information "a" that represents the resolution of the screen of the client, and sends the information "a" that represents the resolution of the screen of the client to the server.

At block 202, the server receives the configuration downloading request, and obtains an advertisement configuration file according to the configuration downloading request which contains the information that represents the resolution of the screen of the client.

Specifically, the server receives the configuration downloading request, and searches for corresponding relationships between stored screen resolution and advertisement configuration files, according to the configuration downloading request which contains the information that represents the resolution of the screen of the client; if a corresponding advertisement configuration file is searched out, then obtains the advertisement configuration file corresponding to the information that represents the resolution of the screen of the client, and if a corresponding advertisement configuration file fails to be searched out, then obtains an advertisement configuration file corresponding to universal screen resolution.

Clients with different screen resolution have different locations and modes for displaying advertisements, and technical personnel regularly configure advertisement configuration files corresponding to currently commonly used several kinds of screen resolution, and store each commonly used screen resolution and an advertisement configuration file configured for each commonly used screen resolution in the corresponding relationships between screen resolution and the advertisement configuration files. In addition, technical personnel also regularly configure advertisement configuration files corresponding to the universal screen resolution.

An advertisement configuration file includes a version number, a name of an advertisement picture resource package, an advertisement display location and advertisement configuration information of one or more advertisements; the advertisement configuration information includes an advertisement ID, an advertisement title, an advertisement playing mode, an advertisement validity period, an advertisement content address and link configuration information; furthermore, advertisement configuration information may also include advertisement display time.

The advertisement configuration file corresponds to one or more advertisement picture resource packages, and a name or names of one or more advertisement picture resource packages are stored in the advertisement configuration file. The advertisement picture resource package stores advertisement content which may be pictures or an animation and is in one-to-one correspondence to advertisement content addresses; the advertisement playing mode includes continuous playing or only playing once; the advertisement validity period is a period from advertisement start time to advertisement end time, for example, when start time of an advertisement is T1, and its end time is T2, the advertisement validity period of the advertisement is a period from T1 to T2; the link configuration information may include a webpage skip address or message content, and may also include an advertisement display type. The advertisement display type includes web page display and message box display.

For example, it is supposed that, currently several common kinds of screen resolution includes screen resolution a, b, c and d, technical personnel regularly configure advertisement configuration files a, b, c and d corresponding to screen resolution a, b, c and d respectively, and store the screen resolution a, b, c and d as well as the advertisement configuration files a, b, c and d corresponding to the screen resolution a, b, c and d respectively in corresponding relationships between screen resolution and advertisement configuration files as shown in Table 1; in addition, technical personnel also regularly configure advertisement configuration file e corresponding to universal screen resolution.

**Table 1**

| Screen Resolution | Advertisement Configuration File |
|---|---|
| a | Advertisement configuration file a |
| b | Advertisement configuration file b |
| c | Advertisement configuration file c |
| d | Advertisement configuration file d |

The server receives the configuration downloading request sent from the client, searches the corresponding relationship between screen resolution and advertisement configuration files as shown in Table 1 according to information "a" that represents the resolution of the screen of the client contained in the configuration downloading request, and searches the corresponding advertisement configuration file a.

At block 203, the server sends a configuration downloading response message, and the configuration downloading response message contains an obtained advertisement configuration file.

For example, the server sends a configuration downloading response message, and the configuration downloading response message contains the searched advertisement configuration file "a". The advertisement configuration file "a" includes a version number, Verson2, a name of advertisement picture resource package, Name2, an advertisement display location, Location, advertisement configuration information of advertisement 1, Info1, advertisement configuration information of advertisement 2, Info 2, and advertisement configuration information of advertisement 3, Info 3. The advertisement configuration information of advertisement 1, Info1, includes an advertisement ID, ID1, an advertisement title, titile1, an advertisement playing mode which is continuous playing, an advertisement validity period which is a period of time from t11 to t12, an advertisement content address, IP1, and link configuration information which is a webpage skip address URL1. The advertisement configuration information of advertisement 2, Info 2, includes an advertisement ID, ID2, an advertisement title, title 2, an advertisement playing mode which is continuous playing, an advertisement validity period which is a period of time from t21 to t22, an advertisement content address, IP2, and link configuration information which is a webpage skip address URL2. The advertisement configuration information of advertisement 3, Info3, includes an advertisement ID, ID3, an advertisement title, title 3, an advertisement playing mode which is continuous playing, an advertisement validity period which is a period of time from t31 to t32, an advertisement content address, IP3, and link configuration information which is a webpage skip address URL3.

At block 204, the client receives the configuration downloading response message sent from the server, determines whether the advertisement configuration file carried in the configuration downloading response message is a new version of advertisement configuration file, and if yes, executes block 205.

Specifically, the client receives the configuration downloading response message sent from the server, extracts a version number from the advertisement configuration file contained in the configuration download response message, and compares the extracted version number and a version number of an advertisement configuration file which has been stored locally. If the two are same, it is determined that the advertisement configuration file has been stored locally, that is, the advertisement configuration file is not a new version of advertisement configuration file, and if the two are not same, it is determined that the advertisement configuration file has not been stored locally, that is, the advertisement configuration file is a new version of advertisement configuration file.

If it is determined that the advertisement configuration file is not a new version of advertisement configuration file, the advertisement configuration file is discarded directly.

For example, the client receives a configuration downloading response message which contains advertisement configuration file a, and extracts a version number Version2 from the advertisement configuration file a. It is supposed that, the version number of the advertisement configuration file stored locally is Version1, the client compares the version number Version1 of the advertisement configuration file stored locally with extracted version number Version2. If the two are compared not same, it is determined that the advertisement configuration file a is a new version of advertisement configuration file.

The advertisement configuration file corresponds to one or more advertisement picture resource packages; further, if it is determined that the advertisement configuration file contained in the configuration downloading response message is a new version of advertisement configuration file, the client deletes the advertisement configuration file stored locally, deletes one or more advertisement picture resource packages corresponding to the advertisement configuration file stored locally, and then stores the advertisement configuration file contained in the configuration downloading response message.

At block 205, the client extracts the name of the advertisement picture resource package from the advertisement configuration file, sends a picture downloading request message, and the picture downloading request message carries the name of the advertisement picture resource package.

For example, the client extracts an advertisement picture resource package Name2 from the advertisement configuration file a, sends a picture downloading request message to the server, and the picture downloading request message contains the name of the advertisement picture resource package Name2.

At block 206, the server receives the picture downloading request message, and obtains a corresponding advertisement picture resource package according to the name of the advertisement picture resource package carried in the picture downloading request message.

When an operator configures an advertisement configuration file on a regular basis, the operator also configures one or more advertisement picture resource packages corresponding to the advertisement configuration file.

In the embodiment, the sizes of the advertisement configuration files are small, generally with capacities of only a few KBs or tens of KBs, while the advertisement picture resource packages have larger sizes.

At block 207, the server sends a picture downloading response message, and the picture downloading response message carries the obtained advertisement picture resource package.

For example, the server receives the picture downloading request message sent from the client, the picture downloading request message containing the name of the advertisement picture resource package Name2, obtains corresponding the advertisement picture resource package according to the name of the advertisement picture resource package Name2 which is supposed to be advertisement picture resource package A; and sends a picture downloading response message which contains an advertisement picture resource package A.

At block 208, the client receives the picture downloading response message.

After receiving the picture downloading response message, the client stores the advertisement picture resource package contained in the picture downloading response message. For example, the client receives a picture downloading response message which contains advertisement picture resource package A, and stores advertisement picture resource package A.

At block 209, from the advertisement configuration file, the client parses out an advertisement display location as well as advertisement configuration information of one or more advertisements contained in the advertisement configuration file.

The advertisement configuration information may include advertisement ID, advertisement title, advertisement playing mode, advertisement validity period, advertisement content address, advertisement display type and link configuration information, and may also include advertisement display time.

For example, from the advertisement configuration file a, the client parses out advertisement display location, Location, advertisement configuration information of advertisement 1, Info1, advertisement configuration information of advertisement 2, Info2, and advertisement configuration information of advertisement 3, Info3; in which the advertisement configuration information of advertisement 1, Info1, includes an advertisement ID, ID1, an advertisement title, title1, an advertisement playing mode which is continuous playing, an advertisement validity period which is a period of time from t11 to t12, an advertisement content address, IP1, and link configuration information which is a webpage skip address, URL1; advertisement configuration information Info 2 of advertisement 2 includes advertisement ID2, an advertisement title, title 2, an advertisement playing mode which is continuous playing, an advertisement validity period which is a period of time from t21 to t22, an advertisement content address, IP2, and link configuration information which is a webpage skip address URL2; advertisement configuration information of advertisement 3, Info3, includes an advertisement ID, ID3, an advertisement title, title 3, an advertisement playing mode which is playing-once, an advertisement validity period which is a period of time from t31 to t32, an advertisement content address, IP3, and link configuration information which is a webpage skip address, URL3.

At block 210, from parsed advertisement configuration information of an advertisement, the client obtains advertisement configuration information within the advertisement validity period, and deletes the advertisement configuration information locally beyond the advertisement validity period.

Specifically, the client obtains current time, according to the obtained current time, from the parsed advertisement configuration information, separates advertisement configuration information within the advertisement validity period and advertisement configuration information beyond the advertisement validity period, and deletes the advertisement configuration information beyond the advertisement validity period from the advertisement configuration file.

For any parsed advertisement configuration information, it is determined whether the playing validity period contained in the advertisement configuration information includes the current time, if yes, it is determined that the advertisement configuration information is within the advertisement validity period, if not, it is determined that the advertisement configuration information is beyond the advertisement validity period.

For example, from parsed advertisement configuration information of advertisement 1, Info1, advertisement configuration information of advertisement 2, Info2, and advertisement configuration information of advertisement 3, Info3, the client obtains the advertisement configuration information of advertisement 1, Info1, the advertisement configuration information of advertisement 2, Info2, and the advertisement configuration information of advertisement 3, Info3, within the advertisement validity period.

At block 211, the client adds advertisement configuration information within the advertisement validity period into an advertisement alternate playing list, and displays the advertisement at the advertisement display location on a screen of the client according to the advertisement alternate playing list and the advertisement picture resource package.

Specifically, the client adds advertisement configuration information within advertisement validity period into an advertisement alternate playing list, and displays advertisements at the advertisement display location on a screen of a client according to the advertisement alternate playing list and the advertisement picture resource package, by adopting the following steps (1) through (3).
(1) The client sets a pointer to point at the first line of advertisement configuration information in the advertisement alternate playing list.
For example, the client may add advertisement configuration information of advertisement 1, Info1, advertisement configuration information of advertisement 2, Info2, and advertisement configuration information of advertisement 3, Info3, into the advertisement alternate playing list as shown in Table 2, and sets the pointer to point at the first line of advertisement configuration information in the advertisement alternate playing list as shown in Table 2, that is, advertisement configuration information of advertisement 1, Info 1.

**Table 2**

| Advertisement Configuration Information | | | | | |
|---|---|---|---|---|---|
| Advertisement ID | Advertisement Title | Advertisement Playing Mode | Advertisement Validity Period | Advertisement Content Address | Link Configuration Information |
| ID1 | title 1 | Continuous playing | From t11 to t12 | IP1 | URL1 |
| ID2 | title2 | Continuous playing | From t21 to t22 | IP2 | URL2 |
| ID3 | title3 | Playing only once | From t31 to t32 | IP3 | URL3 |

(2) The client reads an advertisement title and an advertisement content address from the advertisement configuration information pointed at by the pointer, obtains corresponding advertisement content from the advertisement picture resource package according to the advertisement content address, and displays the advertisement content and the advertisement title at the advertisement display location at the client; as such, advertisement display is achieved;
Specifically, the client reads an advertisement title and an advertisement content address from the advertisement configuration information pointed at by the pointer, obtains corresponding advertisement content from the advertisement picture resource package according to the advertisement content address, combines the advertisement title with the advertisement content, and displays the combined advertisement title with the advertisement content at the advertisement display location on the screen of the client;
In the present embodiment, the advertisement may be displayed based on time slice, and one or more advertisements may be displayed within a time slice.
When the advertisement is displayed, the user may click the advertisement content of the advertisement through a mouse or other input and output devices, to realize an instruction of inputting the advertisement to the client; accordingly, the client receives the user's click on the advertisement instruction, and obtains link configuration information from advertisement configuration information pointed at by the pointer; if the link configuration information includes a webpage skip address, a corresponding webpage is obtained and displayed according to the webpage skip address; and if the link configuration information includes message content, the user creates a message box and loads the message content to the message box. For example, the client reads advertisement title title1 and advertisement content address IP1 from advertisement configuration information of advertisement 1 Info1 pointed at by the pointer, obtains corresponding advertisement content from the advertisement picture resource package A according to the advertisement content address IP1, combines the advertisement title title1 with obtained advertisement content, displays the advertisement content and the advertisement title at the advertisement display location on the screen of the client; as such, displaying advertisement 1 to a user is achieved;
When advertisement 1 is displayed, the user may click the advertisement content of advertisement 1 through a mouse to input an advertisement instruction to the client. The client receives the advertisement instruction, and obtains link configuration information URL1 from advertisement configuration information of advertisement 1 Info1 pointed at by the pointer, a corresponding webpage is obtained from network according to URL1 and displayed to the user.
(3) It is determined whether the advertisement configuration information pointed at by the pointer is the last line of advertisement configuration information, if yes, the pointer is reset to make it re-point at the first line of advertisement configuration information in the advertisement alternate playing list, and if not, the pointer is set to make it skip to the next line of advertisement configuration information in the advertisement alternate playing list.

In a next new time slice; the client begins to proceed with the above step (2).

Further, after the display of advertisements corresponding to each advertisement configuration information in the advertisement alternate playing list is completed, advertisement configuration information with the playing-once advertisement playing mode is obtained from the advertisement alternate playing list, advertisement IDs and advertisement content addresses are read out from the obtained advertisement configuration information, the advertisement configuration information containing the read out advertisement IDs is deleted from the advertisement configuration file, and advertisement content corresponding to the advertisement content addresses is deleted from the advertisement picture resource package, and the obtained advertisement configuration information is deleted from the advertisement alternate playing list.

For example, the client determines that the advertisement configuration information of advertisement 1 Info1 pointed at by the pointer is not the last line of advertisement configuration information in the advertisement alternate playing list as shown in Table 2, then it sets the pointer to point at a next line of advertisement configuration information, that is, setting the pointer to point at the advertisement configuration information of advertisement 2 Info 2; then displays advertisement 2 according to the above steps (2) and (3) within a new time slice.

After the display of advertisements corresponding to each advertisement configuration information in the advertisement alternate playing list as shown in Table 2 is completed, that is, advertisement 1, advertisement 2 and advertisement 3 corresponding to advertisement configuration information of advertisement 1 Info 1, advertisement configuration information of advertisement 2 Info 2, and advertisement configuration information of advertisement 3 Info 3 respectively are displayed in order, the client obtains advertisement configuration information Info 3 of advertisement 3 with playing-once advertisement playing mode in the advertisement alternate playing list as shown in Table 2, the client obtains the advertisement configuration information of advertisement 3 Info3 with the playing-once advertisement playing mode, and obtains advertisement ID3 and advertisement content address IP3 from configuration information Info 3 of advertisement 3, deletes advertisement configuration information of advertisement ID3 from the advertisement configuration file a stored locally, that is, deleting configuration information of advertisement 3 Info 3, and deleting advertisement content corresponding to advertisement content address IP3 from the advertisement picture resource package; then deletes advertisement configuration information of advertisement 3 Info 3 from the advertisement alternate playing list as shown in Table 2.

Further, if the advertisement configuration information of each advertisement contained in the advertisement configuration file also includes advertisement display time, the client counts display time when it displays the advertisement content and advertisement title on the screen of the client; when counted time reaches the advertisement display time, the client determines whether the advertisement configuration information which the pointer re-points at is the last line of advertisement configuration information in the advertisement alternate playing list, if yes, the client sets the pointer to re-point at the first line of advertisement configuration information in the advertisement alternate playing list, if not, sets the pointer to skip to the next line of advertisement configuration information in the advertisement alternate playing list.

Further, the client monitors the advertisement configuration information of each advertisement in the advertisement alternate playing list in real time. If advertisement configuration information beyond the advertisement validity period is monitored, the client reads out an advertisement ID and an advertisement content address from the advertisement configuration information beyond advertisement validity period, deletes advertisement configuration information containing the read out advertisement ID from the advertisement configuration file, deletes advertisement content corresponding to the advertisement content address from the advertisement picture resource package, and deletes the advertisement configuration information beyond the advertisement validity period from the advertisement alternate playing list.

In the embodiment of the present disclosure, when an advertisement configuration file is downloaded, if the advertisement configuration file is a new version of advertisement configuration file, a name of an advertisement picture resource package shall be extracted from the advertisement configuration file, the advertisement picture resource package corresponding to the name of advertisement picture resource package is downloaded; an advertisement display location and advertisement configuration information are parsed out from the advertisement configuration file. The advertisement configuration information includes advertisement ID, advertisement playing mode, advertisement title, advertisement validity period, advertisement content address and link configuration information; advertisement configuration information within the validity period of advertisement is added into an advertisement alternate playing list, and an advertisement is displayed at the advertisement display location on a screen of a client according to the advertisement alternate playing list and advertisement picture resource package, so as to dynamically update advertisements displayed at the client.

### Embodiment 3

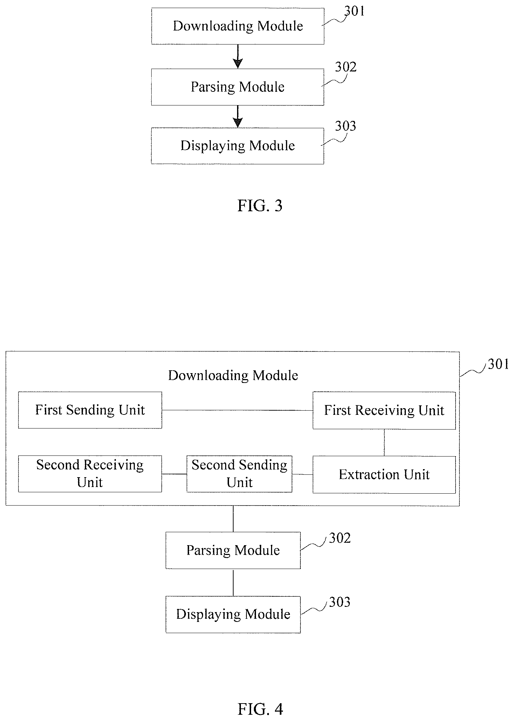

As shown in Fig.3, the embodiment of the present disclosure provides a client, including:
a downloading module 301, configured to download an advertisement configuration file, and if the advertisement configuration file is a new version of advertisement configuration file, extract a name of an advertisement picture resource package from the advertisement configuration file, and download the corresponding advertisement picture resource package according to the name; and
a parsing module 302, configured to parse out an advertisement display location and advertisement configuration information from the advertisement configuration file, the advertisement configuration information including an advertisement validity period;
optionally, the advertisement configuration information may also include at least one of information among advertisement ID, advertisement playing mode, advertisement title, advertisement content address, and link configuration information; and
a displaying module 303, configured to add advertisement configuration information within the advertisement validity period into an advertisement alternate playing list, and display an advertisement at the advertisement display location on a screen of a client according to the advertisement alternate playing list and the advertisement picture resource package.

As shown in Fig. 4, the downloading module 301 includes:
a first sending unit, configured to send a configuration downloading request to a server, the configuration downloading request containing information that represents resolution of the screen of the client, and the server obtaining the advertisement configuration file according to the information that represents the resolution of the screen of the client; and
a first receiving unit, configured to receive a configuration downloading response message, the configuration downloading response message containing the advertisement configuration file obtained by the server.

As shown in Fig.4, the downloading module 301 includes:
an extraction unit, configured to extract a name of an advertisement picture resource package from the advertisement configuration file, if the advertisement configuration file is a new version of advertisement configuration file;
a second sending unit, configured to send a picture downloading request message to a server, the picture downloading request message containing the name of the advertisement picture resource package, and the server obtaining the advertisement picture resource package corresponding to the name of the advertisement picture resource package; and
a second receiving unit, configured to receive a picture downloading request message, the picture downloading request message containing the advertisement picture resource package obtained by the server.

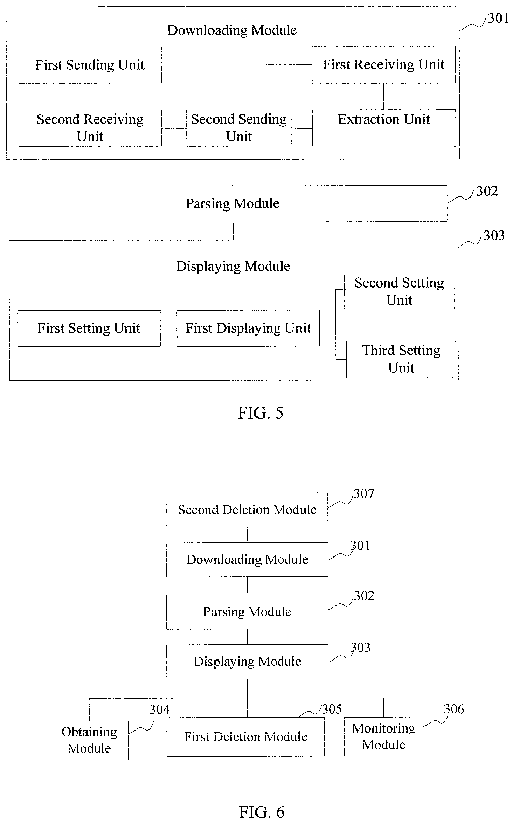

As shown in Fig.5, the displaying module 303 includes:
an adding unit, configured to add advertisement configuration information within the advertisement validity period into an advertisement alternate playing list;
a first setting unit, configured to set a pointer to point at the first line of advertisement configuration information in the advertisement alternate playing list;
a first displaying unit, configured to read an advertisement title and an advertisement content address from the advertisement configuration information pointed at by the pointer, obtain corresponding advertisement content from the advertisement picture resource package according to the advertisement content address, and display the advertisement content and the advertisement title at the advertisement display location at the client; and
a second setting unit, configured to determine whether the advertisement configuration information pointed at by the pointer is the last line of advertisement configuration information, if yes, set the pointer to re-point at the first line of advertisement configuration information in the advertisement alternate playing list, if not, set the pointer to skip to the next line of advertisement configuration information in the advertisement alternate playing list.

As shown in Fig.5, if the advertisement configuration information also includes display time, the displaying module 303 includes:
a third setting unit, configured to count display time when the advertisement content and the advertisement title are displayed on the screen of a client; when counted display time reaches the advertisement display time, determine whether the advertisement configuration information pointed at by the pointer is the last line of advertisement configuration information, if yes, set the pointer to re-point at the first line of advertisement configuration information in the advertisement alternate playing list, and if not, set the pointer to skip to the next line of advertisement configuration information in the advertisement alternate playing list.

Further, as shown in Fig. 6, the client also includes:
an obtaining module 304, configured to receive a user's click operation on an advertisement instruction, and read link configuration information from advertisement configuration information pointed at by the pointer; if the link configuration information includes a webpage skip address, obtain a corresponding webpage according to the webpage skip address; and if the link configuration information includes message content, create a message box and load the message content to the message box.

Further, as shown in Fig. 6, the client also includes:
a first deletion module 305, configured to obtain advertisement configuration information with a playing-once advertisement playing mode from an advertisement alternate playing list, after the display of advertisements corresponding to the advertisement configuration information in the advertisement alternate playing list is completed, read an advertisement ID and an advertisement content address from the obtained advertisement configuration information, delete advertisement configuration information that contains the advertisement ID from the advertisement configuration file, delete advertisement content that corresponds to the advertisement content address from the advertisement picture resource package, and delete the obtained advertisement configuration information from the advertisement alternate playing list.

Further, as shown in Fig. 6, the client also includes:
a monitoring module 306, configured to monitor the advertisement alternate playing list in real time, if a monitoring result shows that the advertisement alternate playing list contains advertisement configuration information beyond the advertisement validity period, then read an advertisement ID and an advertisement content address from the advertisement configuration information, delete advertisement configuration information that contains the advertisement ID from the advertisement configuration file, and delete advertisement content that corresponds to the advertisement content address from the advertisement picture resource package, and delete the advertisement configuration information from the advertisement alternate playing list.

Further, as shown in Fig. 6, the client also includes:
a second deletion module 307, configured to delete the advertisement configuration file and the advertisement picture resource package stored at the client, if the advertisement configuration file is a new version of advertisement configuration file.

In the embodiment of the present disclosure, when an advertisement configuration file is downloaded, if the advertisement configuration file is a new version of advertisement configuration file, a name of an advertisement picture resource package is extracted from the advertisement configuration file, advertisement picture resource package corresponding to the name of advertisement picture resource package is downloaded; advertisement display location and advertisement configuration information are parsed out from the advertisement configuration file. Advertisement configuration information includes advertisement ID, advertisement playing mode, advertisement title, advertisement validity period, advertisement content address and link configuration information; advertisement configuration information within validity period of advertisement is added into an advertisement alternate playing list, and advertisements are displayed at the advertisement display location on a screen of a client according to the advertisement alternate playing list and advertisement picture resource package, so as to dynamically update advertisements displayed at the client.

Those persons having ordinary skill in the art may understand that all or part of the steps for achieving the above embodiments may be completed by hardware, and may be completed by programs instructing relevant hardware, the aforesaid programs may be stored in a computer readable storage medium why may be ROM, disc or CD-ROM, etc.

## Claims

1. A method for displaying advertisements, implemented on a client, wherein the method comprises:
downloading (101) an advertisement configuration file from a server, and if the advertisement configuration file is a new version of advertisement configuration file, extracting a name of an advertisement picture resource package from the advertisement configuration file, and downloading the corresponding advertisement picture resource package according to the name from the server;
parsing out (102) an advertisement display location on a screen of the client and advertisement configuration information from the advertisement configuration file, the advertisement configuration information including an advertisement validity period; and
adding (103) the advertisement configuration information within the advertisement validity period into an advertisement alternate playing list, displaying an advertisement at the advertisement display location on the screen of the client parsed out according to the advertisement alternate playing list and the advertisement picture resource package;
wherein displaying the advertisement at the advertisement display location on the screen of the client parsed out according to the advertisement alternate playing list and the advertisement picture resource package comprises:
setting a pointer to point at a first line of the advertisement configuration information in the advertisement alternate playing list;
reading an advertisement title and an advertisement content address from the advertisement configuration information pointed at by the pointer, obtaining corresponding advertisement content from the advertisement picture resource package according to the advertisement content address, and displaying the advertisement content and the advertisement title at the advertisement display location on the screen of the client parsed out; and
determining whether the advertisement configuration information pointed at by the pointer is a last line of the advertisement configuration information, if the determination is yes, setting the pointer to re-point at the first line of advertisement configuration information in the advertisement alternate playing list, and if the determination is no, setting the pointer to skip to a next line of the advertisement configuration information in the advertisement alternate playing list.

2. The method according to claim 1, wherein downloading the advertisement configuration file comprises:
sending a configuration downloading request to the server, the configuration downloading request containing information that represents resolution of the screen of the client, and the server obtaining the advertisement configuration file according to the information that represents the resolution of the screen of the client; and
receiving a configuration downloading response message, the configuration downloading response message carrying the advertisement configuration file obtained by the server.

3. The method according to claim 1, wherein downloading the corresponding advertisement picture resource package corresponding to the name comprises:
sending a picture downloading request message to the server, the picture downloading request message containing the name, and the server obtaining the corresponding advertisement picture resource package according to the name; and
receiving a picture downloading response message, the picture downloading response message carrying the advertisement picture resource package obtained by the server.

4. The method according to claim 1, wherein the advertisement configuration information further comprises advertisement display time, and displaying the advertisement at the advertisement display location on the screen of the client parsed out according to the advertisement alternate playing list and the advertisement picture resource package further comprises:
counting display time when the advertisement content and the advertisement title are displayed on the screen of the client; and
when counted display time reaches the advertisement display time, determining whether the advertisement configuration information pointed at by the pointer is the last line of advertisement configuration information, if the determination is yes, setting the pointer to re-point at the first line of advertisement configuration information in the advertisement alternate playing list, and if the determination is no, setting the pointer to skip to the next line of advertisement configuration information in the advertisement alternate playing list.

5. The method according to claim 1 or claim 4, further comprising:
in response to determining that the link configuration information includes a webpage skip address, obtaining a corresponding webpage according to the webpage skip address

6. The method according to claim 1 or claim 4, further comprising:
after display of the advertisement corresponding to the advertisement configuration information in the advertisement alternate playing list is completed, obtaining advertisement configuration information with a playing-once advertisement playing mode, reading an advertisement ID and an advertisement content address from the obtained advertisement configuration information, deleting the advertisement configuration information that contains the advertisement ID from the advertisement configuration file, deleting advertisement content that corresponds to the advertisement content address from the advertisement picture resource package, and deleting the obtained advertisement configuration information from the advertisement alternate playing list.

7. The method according to claim 1, wherein the steps after adding advertisement configuration information within advertisement validity period into the advertisement alternate playing list, further comprises:
monitoring the advertisement alternate playing list in real time, if a monitoring result shows that the advertisement alternate playing list contains advertisement configuration information beyond the advertisement validity period, then reading an advertisement ID and an advertisement content address from the advertisement configuration information, deleting advertisement configuration information that contains the advertisement ID from the advertisement configuration file, deleting advertisement content that corresponds to the advertisement content address from the advertisement picture resource package, and deleting the advertisement configuration information from the advertisement alternate playing list.

8. The method according to claim 1, comprising:
if the advertisement configuration file is the new version of advertisement configuration file, deleting the advertisement configuration file and the advertisement picture resource package stored at the client.

9. A client, wherein the client comprises:
a downloading module (301), to download an advertisement configuration file, and if the advertisement configuration file is a new version of advertisement configuration file, extract a name of an advertisement picture resource package from the advertisement configuration file, and download the corresponding advertisement picture resource package according to the name;
a parsing module (302), to parse out an advertisement display location on a screen of the client and advertisement configuration information from the advertisement configuration file, the advertisement configuration information including an advertisement validity period; and
a displaying module (303), to add the advertisement configuration information within the advertisement validity period into an advertisement alternate playing list, display an advertisement at the advertisement display location on the screen of the client parsed out according to the advertisement alternate playing list and the advertisement picture resource package;
wherein the displaying module (303) comprises:
an adding unit, to add the advertisement configuration information within the advertisement validity period into the advertisement alternate playing list;
a first setting unit, to set a pointer to point at a first line of the advertisement configuration information in the advertisement alternate playing list;
a first displaying unit, to read an advertisement title and an advertisement content address from the advertisement configuration information pointed at by the pointer, obtain corresponding advertisement content from the advertisement picture resource package according to the advertisement content address, and display the advertisement content and the advertisement title at the advertisement display location on the screen of the client parsed out; and
a second setting unit, to determine whether the advertisement configuration information pointed at by the pointer is a last line of advertisement configuration information, if the determination is yes, set the pointer to re-point at the first line of the advertisement configuration information in the advertisement alternate playing list, and if the determination is no, set the pointer to skip to a next line of the advertisement configuration information in the advertisement alternate playing list.

10. The client according to claim 9, wherein the downloading module (301) comprises:
a first sending unit, to send a configuration downloading request to a server, the configuration downloading request containing information that represents resolution of the screen of the client, and the server obtaining the advertisement configuration file according to the information that represents the resolution of the screen of the client; and
a first receiving unit, to receive a configuration downloading response message, the configuration downloading response message containing the advertisement configuration file obtained by the server.

11. The client according to claim 9, wherein the downloading module (301) comprises:
an extraction unit, to extract a name of an advertisement picture resource package from the advertisement configuration file, if the advertisement configuration file is a new version of advertisement configuration file;
a second sending unit, to send a picture downloading request message to a server, the picture downloading request message containing the name of the advertisement picture resource package, and the server obtaining the advertisement picture resource package corresponding to the name; and
a second receiving unit, to receive a picture downloading response message, the picture downloading response message containing the advertisement picture resource package obtained by the server.

12. The client according to claim 9, wherein if the advertisement configuration information also comprises display time, the displaying module (303) also comprises:
a third setting unit, to count display time when the advertisement content and the advertisement title are displayed on the screen of a client; when counted display time reaches the advertisement display time, determine whether the advertisement configuration information pointed at by the pointer is the last line of advertisement configuration information, if the determination is yes, set the pointer to re-point at the first line of advertisement configuration information in the advertisement alternate playing list, and if the determination is no, set the pointer to skip to the next line of advertisement configuration information in the advertisement alternate playing list.

13. The client according to claim 9 or claim 12, wherein the obtaining module is further configured to, in response to determining that the link configuration information includes a webpage skip address, obtain a corresponding webpage according to the webpage skip address.

14. The client according to claim 9 or claim 12, further comprising:
a first deletion module, to obtain advertisement configuration information with a playing-once advertisement playing mode from the advertisement alternate playing list, after display of advertisements corresponding to the advertisement configuration information in the advertisement alternate playing list is completed, read an advertisement ID and an advertisement content address from the obtained advertisement configuration information, delete advertisement configuration information that contains the advertisement ID from the advertisement configuration file, delete advertisement content that corresponds to the advertisement content address from the advertisement picture resource package, and delete the obtained advertisement configuration information from the advertisement alternate playing list.

15. The client according to claim 9, further comprising:
a monitoring module, to monitor the advertisement alternate playing list in real time, if a monitoring result shows that the advertisement alternate playing list contains advertisement configuration information beyond the advertisement validity period, then read an advertisement ID and an advertisement content address from the advertisement configuration information, delete advertisement configuration information that contains the advertisement ID from the advertisement configuration file, delete advertisement content that corresponds to the advertisement content address from the advertisement picture resource package, and delete the advertisement configuration information from the advertisement alternate playing list.

16. The client according to claim 9, further comprising:
a second deletion module, to delete the advertisement configuration file and the advertisement picture resource package stored at the client, if the advertisement configuration file is a new version of advertisement configuration file.

## Patentansprüche

1. Verfahren zum Anzeigen von Anzeigen, das auf einem Client implementiert ist, wobei das Verfahren umfasst:
Herunterladen (101) einer Anzeigen-Konfigurationsdatei von einem Server, und wenn die Anzeigen-Konfigurationsdatei eine neue Version der Anzeigen-Konfigurationsdatei ist, Extrahieren eines Namens eines Anzeigen-Bildressourcenpakets aus der Anzeigen-Konfigurationsdatei und Herunterladen des entsprechenden Anzeigen-Bildressourcenpakets entsprechend dem Namen vom Server;
Auslesen (102) einer Anzeigen-Anzeigeposition auf einem Bildschirm des Clients und Anzeigen-Konfigurationsinformation aus der Anzeigen-Konfigurationsdatei, wobei die Anzeigen-Konfigurationsinformation eine Anzeigen-Gültigkeitsdauer enthält; und
Hinzufügen (103) der Anzeigen-Konfigurationsinformation innerhalb der Anzeigen-Gültigkeitsdauer in eine Anzeigen-Alternativ-Wiedergabeliste, Anzeigen einer Anzeige an der Anzeigen-Anzeigeposition auf dem Bildschirm des Clients, die gemäß der Anzeigen-Alternativ-Wiedergabeliste und dem Anzeigen-Bildressourcenpaket ausgelesen wird;
wobei Anzeigen der Anzeige an der Anzeigen-Anzeigeposition auf dem Bildschirm des Clients, die gemäß der Anzeigen-Alternativ-Wiedergabeliste und dem Anzeigen-Bildressourcenpaket, das die Anzeige umfasst, ausgelesen wurde, umfasst:
Setzen eines Zeigers, der auf eine erste Zeile der Anzeigen-Konfigurationsinformation in der Anzeigen-Alternativ-Wiedergabeliste zeigt;
Auslesen eines Anzeigen-Titels und einer Adresse des Anzeigen-Inhalts aus der vom Zeiger angezeigten Konfigurationsinformation der Anzeige, Erlangen des entsprechenden Anzeigen-Inhalts aus dem Anzeigen-Bildressourcenpaket entsprechend der Adresse des Anzeigen-Inhalts und Anzeigen des Anzeigen-Inhalts und des Anzeigen-Titels an der Anzeigen-Anzeigeposition auf dem Bildschirm des ausgelesenen Clients; und
Bestimmen, ob die Anzeigen-Konfigurationsinformation, auf die der Zeiger zeigt, eine letzte Zeile der Anzeigen-Konfigurationsinformation ist, wenn die Bestimmung ja ist, Setzen des Zeigers, um erneut auf die erste Zeile der Anzeigen-Konfigurationsinformation in der Anzeigen-Alternativ-Wiedergabeliste zu zeigen, und wenn die Bestimmung nein ist, Setzen des Zeigers, um zu einer nächsten Zeile der Anzeigen-Konfigurationsinformation in der Anzeigen-Alternativ-Wiedergabeliste zu springen.

2. Verfahren nach Anspruch 1, bei dem Herunterladen der Anzeigen-Konfigurationsdatei umfasst:
Senden einer Anforderung zum Herunterladen der Konfiguration an den Server, wobei die Anforderung zum Herunterladen der Konfiguration Information enthält, die die Auflösung des Bildschirms des Clients repräsentiert, und der Server die Anzeigen-Konfigurationsdatei gemäß der Information erhält, die die Auflösung des Bildschirms des Clients repräsentiert; und
Empfangen einer Antwortnachricht zum Herunterladen der Konfiguration, wobei die Antwortnachricht zum Herunterladen der Konfiguration die vom Server erhaltene Anzeigen-Konfigurationsdatei trägt.

3. Verfahren nach Anspruch 1, bei dem Herunterladen des entsprechenden, dem Namen entsprechenden Anzeigen-Bildressourcenpakets umfasst:
Senden einer Nachricht zum Herunterladen von Bildern an den Server, wobei die Nachricht zum Herunterladen von Bildern den Namen enthält, und der Server das entsprechende Anzeigen-Bildressourcenpaket entsprechend dem Namen erlangt; und
Empfangen einer Antwortnachricht für das Herunterladen von Bildern, wobei die Antwortnachricht für das Herunterladen von Bildern das vom Server erhaltene Bild-Ressourcenpaket für die Anzeige trägt.

4. Verfahren nach Anspruch 1, bei dem die Anzeigen-Konfigurationsinformation ferner Anzeigedauer der Anzeige umfasst und Anzeigen der Anzeige an der Anzeigen-Anzeigeposition auf dem Bildschirm, die gemäß der Anzeigen-Alternativ-Wiedergabeliste und dem Anzeigen-Bildressourcenpaket ausgelesen wurde, ferner umfasst:
Zählen der Anzeigezeit, wenn der Anzeigen-Inhalt und der Anzeigen-Titel auf dem Bildschirm des Clients angezeigt werden; und
wenn die gezählte Anzeigezeit die Anzeigen-Anzeigezeit erreicht, Bestimmen, ob die vom Zeiger angezeigte Anzeigen-Konfigurationsinformation die letzte Zeile der Anzeigen-Konfigurationsinformation ist, wenn die Bestimmung ja ist, Setzen des Zeigers, um erneut auf die erste Zeile der Anzeigen-Konfigurationsinformation in der Anzeigen-Alternativ-Wiedergabeliste zu zeigen, und wenn die Bestimmung nein ist, Setzen des Zeigers, um zur nächsten Zeile der Anzeigen-Konfigurationsinformation in der Konfigurationsinformation in der Anzeigen-Alternativ-Wiedergabeliste zu springen.

5. Verfahren nach Anspruch 1 oder Anspruch 4, weiter umfassend:
als Reaktion auf die Bestimmung, dass die Link-Konfigurationsinformation eine Skip-Adresse der Webseite enthält, Erlangen einer entsprechende Webseite entsprechend der Skip-Adresse der Webseite.

6. Verfahren nach Anspruch 1 oder Anspruch 4, weiter umfassend:
nachdem die Anzeige der Anzeige, die der Anzeigen-Konfigurationsinformation in der Anzeigen-Alternativ-Wiedergabeliste entspricht, abgeschlossen ist, Erhalten von Anzeigen-Konfigurationsinformation mit einem Einmal-Wiedergabemodus der Anzeige, Lesen einer Anzeigen-ID und einer Anzeigen-Inhaltsadresse aus der erhaltenen Anzeigen-Konfigurationsinformation, Löschen der Anzeigen-Konfigurationsinformation, die die Anzeigen-ID enthält, aus der Anzeigen-Konfigurationsdatei, Löschen von Anzeigen-Inhalt, der der Anzeigen-Inhaltsadresse entspricht, aus dem Anzeigen-Bildressourcenpaket und Löschen der erhaltenen Anzeigen-Konfigurationsinformation aus der Anzeigen-Alternativ-Wiedergabeliste.

7. Verfahren nach Anspruch 1, bei dem die Schritte nach dem Hinzufügen von Anzeigen-Konfigurationsinformation innerhalb der Anzeigen-Gültigkeitsdauer in die Anzeigen-Alternativ-Wiedergabeliste ferner umfassen:
Überwachung der Anzeigen-Alternativ-Wiedergabeliste in Echtzeit, wenn ein Überwachungsergebnis zeigt, dass die Anzeigen-Alternativ-Wiedergabeliste über die Anzeigen-Gültigkeitsdauer hinausgehende Anzeigen-Konfigurationsinformation enthält, dann Lesen einer Anzeigen-ID und einer Anzeigen-Inhaltsadresse aus der Anzeigen-Konfigurationsinformation, Löschen von Anzeigen-Konfigurationsinformation, die die Anzeigen-ID enthält, aus der Anzeigen-Konfigurationsdatei, Löschen von Anzeigen-Inhalten, die der Anzeigen-Inhaltsadresse Anzeigen-Bildressourcenpaket und Löschen der Anzeigen-Konfigurationsinformation aus der Anzeigen-Alternativ-Wiedergabeliste.

8. Verfahren nach Anspruch 1, umfassend:
wenn die Anzeigen-Konfigurationsdatei die neue Version der Anzeigen-Konfigurationsdatei ist, Löschen der Anzeigen-Konfigurationsdatei und des auf dem Client gespeicherten Anzeigen-Bildressourcenpakets.

9. Client, wobei der Client umfasst:
ein Download-Modul (301), um eine Anzeigen-Konfigurationsdatei herunterzuladen, und wenn die Anzeigen-Konfigurationsdatei eine neue Version der Anzeigen-Konfigurationsdatei ist, Extrahieren eines Namens eines Anzeigen-Bildressourcenpakets aus der Anzeigen-Konfigurationsdatei und Herunterladen des entsprechenden Anzeigen-Bildressourcenpakets entsprechend dem Namen;
ein Auslese-Modul (302), um eine Anzeigen-Anzeigeposition auf einem Bildschirm des Clients und Anzeigen-Konfigurationsinformation aus der Anzeigen-Konfigurationsdatei auszulesen, wobei die Anzeigen-Konfigurationsinformation eine Anzeigen-Gültigkeitsdauer enthält; und
ein Anzeigemodul (303), um die Anzeigen-Konfigurationsinformation innerhalb der Anzeigen-Gültigkeitsdauer in eine Anzeigen-Alternativ-Wiedergabeliste einzufügen, eine Anzeige an der Anzeigen-Anzeigeposition auf dem Bildschirm des Clients anzuzeigen, die gemäß der Anzeigen-Alternativ-Wiedergabeliste und dem Anzeigen-Bildressourcenpaket ausgelesen wurde;
wobei das Anzeigemodul (303) umfasst:
eine Hinzufügungseinheit, um die Anzeigen-Konfigurationsinformation innerhalb der Anzeigen-Gültigkeitsdauer in die Anzeigen-Alternativ-Wiedergabeliste einzufügen;
eine erste Einstelleinheit, um einen Zeiger auf eine erste Zeile der Anzeigen-Konfigurationsinformation in der Anzeigen-Alternativ-Wiedergabeliste zu setzen;
eine erste Anzeigeeinheit, um einen Anzeigen-Titel und eine Anzeigen-Inhaltsadresse aus der vom Zeiger angezeigten Anzeigen-Konfigurationsinformation zu lesen, den entsprechenden Anzeigen-Inhalt aus dem Anzeigen-Bildressourcenpaket entsprechend der Anzeigen-Inhaltsadresse zu erhalten und den Anzeigen-Inhalt und den Anzeigen-Titel an der Anzeigen-Anzeigeposition auf dem Bildschirm des ausgelesenen Clients anzuzeigen; und
eine zweite Einstelleinheit zum Bestimmen, ob die vom Zeiger angezeigte Anzeigen-Konfigurationsinformation eine letzte Zeile der Anzeigen-Konfigurationsinformation ist, wenn die Bestimmung ja ist, den Zeiger so einstellen, dass er erneut auf die erste Zeile der Anzeigen-Konfigurationsinformation in der Anzeigen-Alternativ-Wiedergabeliste zeigt, und wenn die Bestimmung nein ist, den Zeiger so einstellen, dass er zu einer nächsten Zeile der Anzeigen-Konfigurationsinformation in der Anzeigen-Alternativ-Wiedergabeliste springt.

10. Client nach Anspruch 9, wobei das Download-Modul (301) umfasst:
eine erste Sendeeinheit, um eine Konfigurations-Download-Anforderung an einen Server zu senden, wobei die Konfigurations-Download-Anforderung Information enthält, die die Auflösung des Bildschirms des Clients repräsentiert, und der Server die Anzeigen-Konfigurationsdatei gemäß der Information erhält, die die Auflösung des Bildschirms des Clients repräsentiert; und
eine erste Empfangseinheit, um eine Antwortnachricht zum Herunterladen der Konfiguration zu empfangen, wobei die Antwortnachricht zum Herunterladen der Konfiguration die vom Server erhaltene Anzeigen-Konfigurationsdatei enthält.

11. Client nach Anspruch 9, wobei das Download-Modul (301) umfasst:
eine Extraktionseinheit, um den Namen eines Anzeigen-Bildressourcenpakets aus der Anzeigen-Konfigurationsdatei zu extrahieren, wenn die Anzeigen-Konfigurationsdatei eine neue Version der Anzeigen-Konfigurationsdatei ist;
eine zweite Sendeeinheit, um eine Bildherunterlade-Anforderungsnachricht an einen Server zu senden, wobei die Bildherunterlade-Anforderungsnachricht den Namen des Anzeigen-Bildressourcenpakets enthält und der Server das dem Namen entsprechende Anzeigen-Bildressourcenpaket erlangt; und
eine zweite Empfangseinheit, um eine Antwortnachricht zum Herunterladen von Bildern zu erhalten, wobei die Antwortnachricht zum Herunterladen von Bildern das vom Server erhaltene Anzeigen-Bildressourcenpaket enthält.

12. Client nach Anspruch 9, wobei, wenn die Anzeigen-Konfigurationsinformation auch Anzeigezeit umfasst, auch das Anzeigemodul (303) umfasst:
eine dritte Einstelleinheit, um die Anzeigezeit zu zählen, wenn der Anzeigen-Inhalt und der Anzeigen-Titel auf dem Bildschirm eines Clients angezeigt werden; wenn die gezählte Anzeigezeit die Anzeigezeit erreicht, Bestimmen, ob die Anzeigen-Konfigurationsinformation, auf die der Zeiger zeigt, die letzte Zeile der Anzeigen-Konfigurationsinformation ist; wenn die Bestimmung ja ist, wird der Zeiger so eingestellt, dass er erneut auf die erste Zeile der Anzeigen-Konfigurationsinformation in der Anzeigen-Alternativ-Wiedergabeliste zeigt, und wenn die Bestimmung nein ist, wird der Zeiger so eingestellt, dass er zur nächsten Zeile der Anzeigen-Konfigurationsinformation in der Anzeigen-Alternativ-Wiedergabeliste springt.

13. Client nach Anspruch 9 oder Anspruch 12, wobei das Erlangungsmodul ferner eingerichtet ist, als Reaktion auf die Bestimmung, dass die Information zur Linkkonfiguration eine Skip-Adresse der Webseite enthält, eine entsprechende Webseite entsprechend der Skip-Adresse der Webseite zu erlangen.

14. Client gemäß Anspruch 9 oder Anspruch 12, weiter umfassend:
ein erstes Löschmodul, um Anzeigen-Konfigurationsinformation mit einem einmaligen Anzeigen-Wiedergabemodus aus der Anzeigen-Alternativ-Wiedergabeliste zu erlangen, nachdem die Anzeige von Anzeigen, die der Anzeigen-Konfigurationsinformation in der Anzeigen-Alternativ-Wiedergabeliste entspricht, abgeschlossen ist, eine Anzeigen-ID und eine Anzeigen-Inhaltsadresse aus der erhaltenen Anzeigen-Konfigurationsinformation zu lesen, Anzeigen-Konfigurationsinformation, die die Anzeigen-ID enthält, aus der Anzeigen-Konfigurationsdatei zu löschen, Anzeigen-Inhalte, die der Anzeigen-Inhaltsadresse entsprechen, aus dem Anzeigen-Bildressourcenpaket zu löschen und die erhaltene Anzeigen-Konfigurationsinformation aus der Anzeigen-Alternativ-Wiedergabeliste zu löschen.

15. Client gemäß Anspruch 9, weiter umfassend:
ein Überwachungsmodul, um die Anzeigen-Alternativ-Wiedergabeliste in Echtzeit zu überwachen, wenn ein Überwachungsergebnis zeigt, dass die Anzeigen-Alternativ-Wiedergabeliste über die Anzeigen-Gültigkeitsdauer hinausgehende Konfigurationsdaten enthält, dann Lesen einer Anzeigen-ID und einer Anzeigen-Inhaltsadresse aus der Anzeigen-Konfigurationsinformation, Löschen von Anzeigen-Konfigurationsinformation, die die Anzeigen-ID enthält, aus der Anzeigen-Konfigurationsdatei, Löschen von Anzeigen-Inhalt, der der Anzeigen-Inhaltsadresse entspricht, aus dem Anzeigen-Bildressourcenpaket und Löschen der Anzeigen-Konfigurationsinformation aus der Anzeigen-Alternativ-Wiedergabeliste.

16. Client gemäß Anspruch 9, weiter umfassend:
ein zweites Löschmodul, um die Anzeigen-Konfigurationsdatei und das auf dem Client gespeicherte Anzeigen-Bildressourcenpaket zu löschen, wenn die Anzeigen-Konfigurationsdatei eine neue Version der Anzeigen-Konfigurationsdatei ist.

## Revendications

1. Procédé d'affichage d'annonces publicitaires, mis en œuvre sur un client, dans lequel le procédé comprend :
le chargement (101) d'un fichier de configuration d'annonces publicitaires depuis un serveur, et, si le fichier de configuration d'annonces publicitaires est une nouvelle version de fichier de configuration d'annonces publicitaires, l'extraction d'un nom d'un paquet de ressources d'images d'annonces publicitaires depuis le fichier de configuration d'annonces publicitaires, et le chargement du paquet de ressources d'images d'annonces publicitaires correspondant conformément au nom depuis le serveur ;
l'analyse (102) d'un emplacement d'affichage d'annonces publicitaires sur un écran du client et d'informations de configuration d'annonces publicitaires depuis le fichier de configuration d'annonces publicitaires, les informations de configuration d'annonces publicitaires incluant une période de validité d'annonces publicitaires ; et
l'ajout (103) des informations de configuration d'annonces publicitaires à l'intérieur de la période de validité d'annonces publicitaires dans une liste de lecture de substitution d'annonces publicitaires, l'affichage d'une annonce publicitaire à l'emplacement d'affichage d'annonces publicitaires sur l'écran du client analysé conformément à la liste de lecture de substitution d'annonces publicitaires et au paquet de ressources d'images d'annonces publicitaires ;
dans lequel l'affichage de l'annonce publicitaire à l'emplacement d'affichage d'annonces publicitaires sur l'écran du client analysé conformément à la liste de lecture de substitution d'annonces publicitaires et au paquet de ressources d'images d'annonces publicitaires comprend :
le réglage d'un pointeur pour pointer sur une première ligne des informations de configuration d'annonces publicitaires dans la liste de lecture de substitution d'annonces publicitaires ;
la lecture d'un titre d'annonce publicitaire et d'une adresse de contenu d'annonce publicitaire dans les informations de configuration d'annonces publicitaires pointées par le pointeur, l'obtention d'un contenu d'annonce publicitaire correspondant depuis le paquet de ressources d'images d'annonces publicitaires conformément à l'adresse de contenu d'annonce publicitaire, et l'affichage du contenu d'annonce publicitaire et du titre d'annonce publicitaire à l'emplacement d'affichage d'annonces publicitaires sur l'écran du client analysé ; et
la détermination si les informations de configuration d'annonces publicitaires pointées par le pointeur sont une dernière ligne des informations de configuration d'annonces publicitaires, si la détermination est oui, le réglage du pointeur pour repointer sur la première ligne d'informations de configuration d'annonces publicitaires dans la liste de lecture de substitution d'annonces publicitaires, et si la détermination est non, le réglage du pointeur pour passer à une ligne suivante des informations de configuration d'annonces publicitaires dans la liste de lecture de substitution d'annonces publicitaires.

2. Procédé selon la revendication 1, dans lequel le chargement du fichier de configuration d'annonces publicitaires comprend :
l'envoi d'une demande de chargement de configuration au serveur, la demande de chargement de configuration contenant des informations qui représentent une résolution de l'écran du client, et le serveur obtenant le fichier de configuration d'annonces publicitaires conformément aux informations qui représentent la résolution de l'écran du client ; et
la réception d'un message de réponse de chargement de configuration, le message de réponse de chargement de configuration contenant le fichier de configuration d'annonces publicitaires obtenu par le serveur.

3. Procédé selon la revendication 1, dans lequel le chargement du paquet de ressources d'images d'annonces publicitaires correspondant au nom comprend :
l'envoi d'un message de demande de chargement d'images au serveur, le message de demande de chargement d'images contenant le nom, et le serveur obtenant le paquet de ressources d'images d'annonces publicitaires correspondant conformément au nom ; et
la réception d'un message de réponse de chargement d'images, le message de réponse de chargement d'images contenant le paquet de ressources d'images d'annonces publicitaires obtenu par le serveur.

4. Procédé selon la revendication 1, dans lequel les informations de configuration d'annonces publicitaires comprennent en outre une durée d'affichage d'annonce publicitaire, et l'affichage de l'annonce publicitaire à l'emplacement d'affichage d'annonces publicitaires sur l'écran du client analysé conformément à la liste de lecture de substitution d'annonces publicitaires et au paquet de ressources d'images d'annonces publicitaires comprend en outre :
le décompte de la durée d'affichage lorsque le contenu d'annonce publicitaire et le titre d'annonce publicitaire sont affichés sur l'écran du client ; et
lorsque la durée d'affichage décomptée atteint la durée d'affichage d'annonce publicitaire, la détermination si les informations de configuration d'annonces publicitaires pointées par le pointeur sont la dernière ligne des informations de configuration d'annonces publicitaires, si la détermination est oui, le réglage du pointeur pour repointer sur la première ligne d'informations de configuration d'annonces publicitaires dans la liste de lecture de substitution d'annonces publicitaires, et si la détermination est non, le réglage du pointeur pour passer à la ligne suivante des informations de configuration d'annonces publicitaires dans la liste de lecture de substitution d'annonces publicitaires.

5. Procédé selon la revendication 1 ou la revendication 4, comprenant en outre :
en réponse à la détermination que les informations de configuration de liaison incluent une adresse de saut de page Web, l'obtention d'une page Web correspondante conformément à l'adresse de saut de page Web.

6. Procédé selon la revendication 1 ou la revendication 4, comprenant en outre :
lorsque l'affichage de l'annonce publicitaire correspondant aux informations de configuration d'annonces publicitaires dans la liste de lecture de substitution d'annonces publicitaires est terminé, l'obtention d'informations de configuration d'annonces publicitaires avec un mode de lecture d'annonce publicitaire à lecture unique, la lecture d'un ID d'annonce publicitaire et d'une adresse de contenu d'annonce publicitaire dans les informations de configuration d'annonces publicitaires obtenues, la suppression des informations de configuration d'annonces publicitaires qui contiennent l'ID d'annonce publicitaire du fichier de configuration d'annonces publicitaires, la suppression du contenu d'annonce publicitaire qui correspond à l'adresse de contenu d'annonce publicitaire du paquet de ressources d'images d'annonces publicitaires, et la suppression des informations de configuration d'annonces publicitaires obtenues de la liste de lecture de substitution d'annonces publicitaires.

7. Procédé selon la revendication 1, dans lequel les étapes après l'ajout d'informations de configuration d'annonces publicitaires à l'intérieur d'une période de validité d'annonces publicitaires dans la liste de lecture de substitution d'annonces publicitaires, comprennent en outre :
la surveillance de la liste de lecture de substitution d'annonces publicitaires en temps réel, si un résultat de surveillance montre que la liste de lecture de substitution d'annonces publicitaires contient des informations de configuration d'annonces publicitaires au-delà de la période de validité d'annonces publicitaires, alors la lecture d'un ID d'annonce publicitaire et d'une adresse de contenu d'annonce publicitaire dans les informations de configuration d'annonces publicitaires, la suppression des informations de configuration d'annonces publicitaires qui contiennent l'ID d'annonce publicitaire du fichier de configuration d'annonces publicitaires, la suppression du contenu d'annonce publicitaire qui correspond à l'adresse de contenu d'annonce publicitaire du paquet de ressources d'images d'annonces publicitaires, et la suppression des informations de configuration d'annonces publicitaires de la liste de lecture de substitution d'annonces publicitaires.

8. Procédé selon la revendication 1, comprenant :
si le fichier de configuration d'annonces publicitaires est la nouvelle version de fichier de configuration d'annonces publicitaires, la suppression du fichier de configuration d'annonces publicitaires et du paquet de ressources d'images d'annonces publicitaires stockés au niveau du client.

9. Client, dans lequel le client comprend :
un module de chargement (301), pour charger un fichier de configuration d'annonces publicitaires, et, si le fichier de configuration d'annonces publicitaires est une nouvelle version de fichier de configuration d'annonces publicitaires, extraire un nom d'un paquet de ressources d'images d'annonces publicitaires depuis le fichier de configuration d'annonces publicitaires, et charger le paquet de ressources d'images d'annonces publicitaires correspondant conformément au nom ;
un module d'analyse (302), pour analyser un emplacement d'affichage d'annonces publicitaires sur un écran du client et des informations de configuration d'annonces publicitaires depuis le fichier de configuration d'annonces publicitaires, les informations de configuration d'annonces publicitaires incluant une période de validité d'annonces publicitaires ; et
un module d'affichage (303), pour ajouter les informations de configuration d'annonces publicitaires à l'intérieur de la période de validité d'annonces publicitaires dans une liste de lecture de substitution d'annonces publicitaires, afficher une annonce publicitaire à l'emplacement d'affichage d'annonces publicitaires sur l'écran du client analysé conformément à la liste de lecture de substitution d'annonces publicitaires et au paquet de ressources d'images d'annonces publicitaires ;
dans lequel le module d'affichage (303) comprend :
une unité d'ajout, pour ajouter les informations de configuration d'annonces publicitaires à l'intérieur de la période de validité d'annonces publicitaires dans la liste de lecture de substitution d'annonces publicitaires ;
une première unité de réglage, pour régler un pointeur pour pointer sur une première ligne des informations de configuration d'annonces publicitaires dans la liste de lecture de substitution d'annonces publicitaires ;
une première unité d'affichage, pour lire un titre d'annonce publicitaire et une adresse de contenu d'annonce publicitaire dans les informations de configuration d'annonces publicitaires pointées par le pointeur, obtenir un contenu d'annonce publicitaire correspondant depuis le paquet de ressources d'images d'annonces publicitaires conformément à l'adresse de contenu d'annonce publicitaire, et afficher le contenu d'annonce publicitaire et le titre d'annonce publicitaire à l'emplacement d'affichage d'annonces publicitaires sur l'écran du client analysé ; et
une deuxième unité de réglage, pour déterminer si les informations de configuration d'annonces publicitaires pointées par le pointeur sont une dernière ligne d'informations de configuration d'annonces publicitaires, si la détermination est oui, régler le pointeur pour repointer sur la première ligne d'informations de configuration d'annonces publicitaires dans la liste de lecture de substitution d'annonces publicitaires, et si la détermination est non, régler le pointeur pour passer à une ligne suivante des informations de configuration d'annonces publicitaires dans la liste de lecture de substitution d'annonces publicitaires.

10. Client selon la revendication 9, dans lequel le module de chargement (301) comprend :
une première unité d'envoi, pour envoyer une demande de chargement de configuration à un serveur, la demande de chargement de configuration contenant des informations qui représentent une résolution de l'écran du client, et le serveur obtenant le fichier de configuration d'annonces publicitaires conformément aux informations qui représentent la résolution de l'écran du client ; et
une première unité de réception pour recevoir un message de réponse de chargement de configuration, le message de réponse de chargement de configuration contenant le fichier de configuration d'annonces publicitaires obtenu par le serveur.

11. Client selon la revendication 9, dans lequel le module de chargement (301) comprend :
une unité d'extraction, pour extraire un nom d'un paquet de ressources d'images d'annonces publicitaires du fichier de configuration d'annonces publicitaires, si le fichier de configuration d'annonces publicitaires est une nouvelle version de fichier de configuration d'annonces publicitaires ;
une deuxième unité d'envoi, pour envoyer un message de demande de chargement d'images à un serveur, le message de demande de chargement d'images contenant le nom du paquet de ressources d'images d'annonces publicitaires, et le serveur obtenant le paquet de ressources d'images d'annonces publicitaires correspondant conformément au nom ; et
une deuxième unité de réception, pour recevoir un message de réponse de chargement d'images, le message de réponse de chargement d'images contenant le paquet de ressources d'images d'annonces publicitaires obtenu par le serveur.

12. Client selon la revendication 9, dans lequel, si les informations de configuration d'annonces publicitaires comprennent également une durée d'affichage, le module d'affichage (303) comprend également :
une troisième unité de réglage, pour décompter une durée d'affichage lorsque le contenu d'annonce publicitaire et le titre d'annonce publicitaire sont affichés sur l'écran d'un client ; lorsque la durée d'affichage décomptée atteint la durée d'affichage d'annonce publicitaire, déterminer si les informations de configuration d'annonces publicitaires pointées par le pointeur sont la dernière ligne des informations de configuration d'annonces publicitaires, si la détermination est oui, régler le pointeur pour repointer sur la première ligne d'informations de configuration d'annonces publicitaires dans la liste de lecture de substitution d'annonces publicitaires, et si la détermination est non, régler le pointeur pour passer à la ligne suivante d'informations de configuration d'annonces publicitaires dans la liste de lecture de substitution d'annonces publicitaires.

13. Client selon la revendication 9 ou la revendication 12, dans lequel le module d'obtention est en outre configuré pour, en réponse à la détermination que les informations de configuration de liaison incluent une adresse de saut de page Web, obtenir une page Web correspondante conformément à l'adresse de saut de page Web.

14. Client selon la revendication 9 ou la revendication 12, comprenant en outre :
un premier module de suppression, pour obtenir des informations de configuration d'annonces publicitaires avec un mode de lecture d'annonce publicitaire à lecture unique depuis la liste de lecture de substitution d'annonces publicitaires, lorsque l'affichage d'annonces publicitaires correspondant aux informations de configuration d'annonces publicitaires dans la liste de lecture de substitution d'annonces publicitaires est terminé, lire un ID d'annonce publicitaire et une adresse de contenu d'annonce publicitaire dans les informations de configuration d'annonces publicitaires obtenues, supprimer des informations de configuration d'annonces publicitaires qui contiennent l'ID d'annonce publicitaire du fichier de configuration d'annonces publicitaires, supprimer un contenu d'annonce publicitaire qui correspond à l'adresse de contenu d'annonce publicitaire du paquet de ressources d'images d'annonces publicitaires, et supprimer les informations de configuration d'annonces publicitaires obtenues de la liste de lecture de substitution d'annonces publicitaires.

15. Client selon la revendication 9, comprenant en outre :
un module de surveillance, pour surveiller la liste de lecture de substitution d'annonces publicitaires en temps réel, si un résultat de surveillance montre que la liste de lecture de substitution d'annonces publicitaires contient des informations de configuration d'annonces publicitaires au-delà de la période de validité d'annonces publicitaires, alors lire un ID d'annonce publicitaire et une adresse de contenu d'annonce publicitaire dans les informations de configuration d'annonces publicitaires, supprimer des informations de configuration d'annonces publicitaires qui contiennent l'ID d'annonce publicitaire du fichier de configuration d'annonces publicitaires, supprimer un contenu d'annonce publicitaire qui correspond à l'adresse de contenu d'annonce publicitaire du paquet de ressources d'images d'annonces publicitaires, et supprimer les informations de configuration d'annonces publicitaires de la liste de lecture de substitution d'annonces publicitaires.

16. Client selon la revendication 9, comprenant en outre :
un deuxième module de suppression, pour supprimer le fichier de configuration d'annonces publicitaires et le paquet de ressources d'images d'annonces publicitaires stockés au niveau du client, si le fichier de configuration d'annonces publicitaires est une nouvelle version de fichier de configuration d'annonces publicitaires.
